**Europäisches Patentamt**

**European Patent Office**

**Office européen des brevets**

(19)

(11) Veröffentlichungsnummer: **0 142 576**

**A1**

# (12) EUROPÄISCHE PATENTANMELDUNG

(21) Anmeldenummer: **83111657.9**

(22) Anmeldetag: **22.11.83**

(51) Int. Cl.⁴: **G 01 N 1/28**

(43) Veröffentlichungstag der Anmeldung:
**29.05.85** Patentblatt **85/22**

(84) Benannte Vertragsstaaten:
**DE FR GB SE**

(71) Anmelder: **Freiherr von Gise, Hardo, Dr. med.**
**Schwärzlocher Strasse 110**
**D-7400 Tübingen(DE)**

(72) Erfinder: **Freiherr von Gise, Hardo, Dr. med.**
**Schwärzlocher Strasse 110**
**D-7400 Tübingen(DE)**

(54) **Inkubationskammer für die Einbettung biologischer Präparate in Paraffin mit automatischer Ausblockvorrichtung zur Verwendung in automatisch arbeitenden Inkubationseinrichtungen.**

(57) Die Inkubationskammer für die Einbettung biologischer Präparate in Paraffin ist gekennzeichnet durch eine Außenkammer (1) mit unabhängig von einander temperierbaren Seitenwänden und Bodenplatte, in welche ein zugehöriger herausnehmbarer Präparateträger (2) mit Siebboden (3) eingesetzt wird, auf den schichtweise einzelne Präparatekapseln (9) oder Mehrfachpräparateträger (10) aufgebracht werden, wobei ein an der Bodenplatte der Außenkammer (1) montiertes Magnetrührwerk (7) mit Rührfisch (8) eine Zwangszirkulation bewirkt, und der Präparateträger (2), welcher die schichtweise aufgelegten Präparatekapseln (9) oder die Mehrfachpräparatehalter (10) trägt, mittels einer Aushubvorrichtung, z.B. bestehend aus den beiden an der Außenkammer (1) befestigten Hubzylindern (6a) und (6b) sowie dem Querbalken (5) mit Rastarmen (5a), aus der Inkubationskammer herausgehoben werden kann.

Eine weitere mechanische Einrichtung zur Einbettung ist gekennzeichnet durch ihre Verwendbarkeit als Ausblockvorrichtung für biologische Präparate in Paraffin und besteht aus einem oder mehreren bis zu 90° schwenkbaren Halterahmen für wannenförmige Inkubationskapseln mit Aufblockrahmen oder für Aufblockrahmen alleine, wobei die schwenkbaren Halterahmen dann selbst wannenförmig gestaltet sein können. Die Einrichtung arbeitet nach dem Prinzip, daß die wannenförmigen Inkubationskapseln für biologische Präparate während der Infiltrationsphase der Präparate in einen aufrechten Zustand versetzt werden und nach Abschluß der Infiltration in eine waagerechte Lage zurückversetzt werden, wodurch ein Abfließen des heißen und flüssigen Paraffins verhindert wird, mit nachfolgender Abküklung des Paraffins.

FIGUR 1

Die Erfindung bezieht sich auf eine Inkubationskammer für die Einbettung biologischer Präparate in Paraffin.

Für die lichtmikroskopische Untersuchung von biologischen Proben ist es notwendig, diese in einen schneidfähigen Zustand zu bringen. Als Routineverfahren hat sich die Einbettung des Gewebes in Paraffin durchgesetzt. Das biologische Gewebe wird hierzu durch Aldehydlösungen fixiert und stufenweise über Alkohol oder Aceton entwässert und über eine Zwischenstufe mit einem Intermedium (organisches Lösungsmittel) in flüssiges heißes Paraffin überführt.
Bei allen auf dem Weltmarkt befindlichen Halbautomaten wird das Gewebe dann im heißen und paraffininfiltrierten Zustand aus der Inkubationskammer entnommen und muß in einem manuellen Verfahren dann aufgeblockt werden, damit es nach der Erstarrung des Paraffins dann für den Schneidevorgang in die Halterung eines Mikrotomes eingespannt werden kann. Üblicherweise werden die biologischen Präparate für die Einbettungsprozedur in Präparatekapseln gebracht, die gekennzeichnet werden können und eine spätere Identifizierung ermöglichen. Derartige Präparatekapseln besitzen perforierte Wände, um eine ungehinderte Infiltration des Gewebes mit den Inkubationslösungen zu ermöglichen.
Die herkömmlichen Halbautomaten für die Gewebeeinbettung besitzen Inkubationskammern, die nach dem Prinzip eines einfachen Kochtopfes arbeiten, der über einen Reagenzienversorgungsteil wahlweise mit Reagenzien gefüllt werden kann. Die Präparatekapseln mit den biologischen Proben werden lose oder in Körben in diese Inkubationskammern eingebracht.

Zur Automatisierung des Prozesses wäre es wünschenswert, wenn die Präparate in speziellen Kapseln (parallele Anmeldung einer Erfindung des gleichen Anmelders) und im erstarrten Zustand des Paraffins aus der Inkubationskammer herausgenommen werden könnten, sodaß die Präparate nach der Herauslösung aus den Kapseln sofort mit einem Mikrotom geschnitten werden könnten, ohne daß eine nachfolgende manuelle Aufblockung derselben notwendig ist.

Mit keiner der auf dem Markt befindlichen Inkubationskammern wäre es möglich ein derartiges Verfahren zu realisieren.

Hier will die Erfindung Abhilfe schaffen. Die Erfindung, wie sie in den Ansprüchen gekennzeichnet ist, löst die Aufgabe, eine Inkubationskammer für die Einbettung und Aufblockung biologischer Präparate in Paraffin zur Verwendung in automatischen Inkubationseinrichtungen zu schaffen, durch die konstruktiven Merkmale der in den Zeichnungen dargestellten Inkubationskammer, bestehend aus einer Außenkammer mit getrennt und beliebig temperierbaren Wänden und Grundplatte sowie mechanischer Aushubvorichtung, in die ein Präparateträger gemäß Zeichnung mit Siebboden eingebracht wird, auf den die Präparatekapseln geordnet und schichtweise aufgelegt werden und nach Ablauf des Einbettungsprozesses und der Erstarrung des Paraffins mitsamt Präparateträger unter Zuhil-

2

fenahme der mechanischen Aushubvorichtung aus der Inkubationskammer entnommen werden können und nach schichtweiser Ablösung fertig aufgeblockt für die Einspannung in ein Mikrotom zur Verfügung stehen.

In einem alternativen Verfahren erfolgt die Aufblockung der biologischen Präparate mit einem speziellen Präparateträger, der über schwenkbare Halterungen für spezielle Inkubationskapseln (siehe parallele Patentanmeldung des gleichen Anmelders) verfügt, die während des Infiltrationsprozesses die Inkubationskapseln hochkant ausrichten, so daß der Reagenzienaustausch in den wannenförmig aufgebauten Inkubationskapseln beim Füllen und Leeren der Inkubationskammer nicht beeinträchtigt wird. Nach Abschluß der Infiltration der biologischen Präparate werden die wannenförmigen Inkubationskapseln in eine waagerechte Lage versetzt, die ein Abfließen des heißen Paraffins aus der Inkubationskapsel verhindert, wenn die Inkubationskammer entleert wird. In einem darauf folgenden Kühlprozeß erstarrt das Paraffin in der Inkubationskapsel und bewirkt, daß das auf dem Boden der Inkubationskapsel liegende biologische Gewebe mit dem Aufblockrahmen der Inkubationskapsel eine feste Verbindung eingeht (aufgeblockt wird !). Nach der Ablösung der Außenwanne der Inkubationskapsel steht das schneidfähige aufgeblockte biologische Präparat zur Verfügung.

Die durch die Erfindung erreichten Vorteile sind im wesentlichen darin zu sehen, daß die arbeitsaufwendige Aufblockung der Präparate nach der Infiltration mit heißem Paraffin entfällt, wobei wiederum die Gefahr einer Beschädigung derselben oder eine Verwechslung vermieden wird. Ein weiterer Vorteil der Erfindung liegt darin, daß die Präparate in einem gekühlten und sofort schneidfähigen Zustand entnommen werden können. Durch die Erfindung können darüber hinaus die Kosten einer Paraffinausgießstation eingespart werden.

Im folgenden wird die Erfindung anhand von lediglich einen Ausführungsweg darstellenden Zeichnungen näher erläutert. Es zeigt:

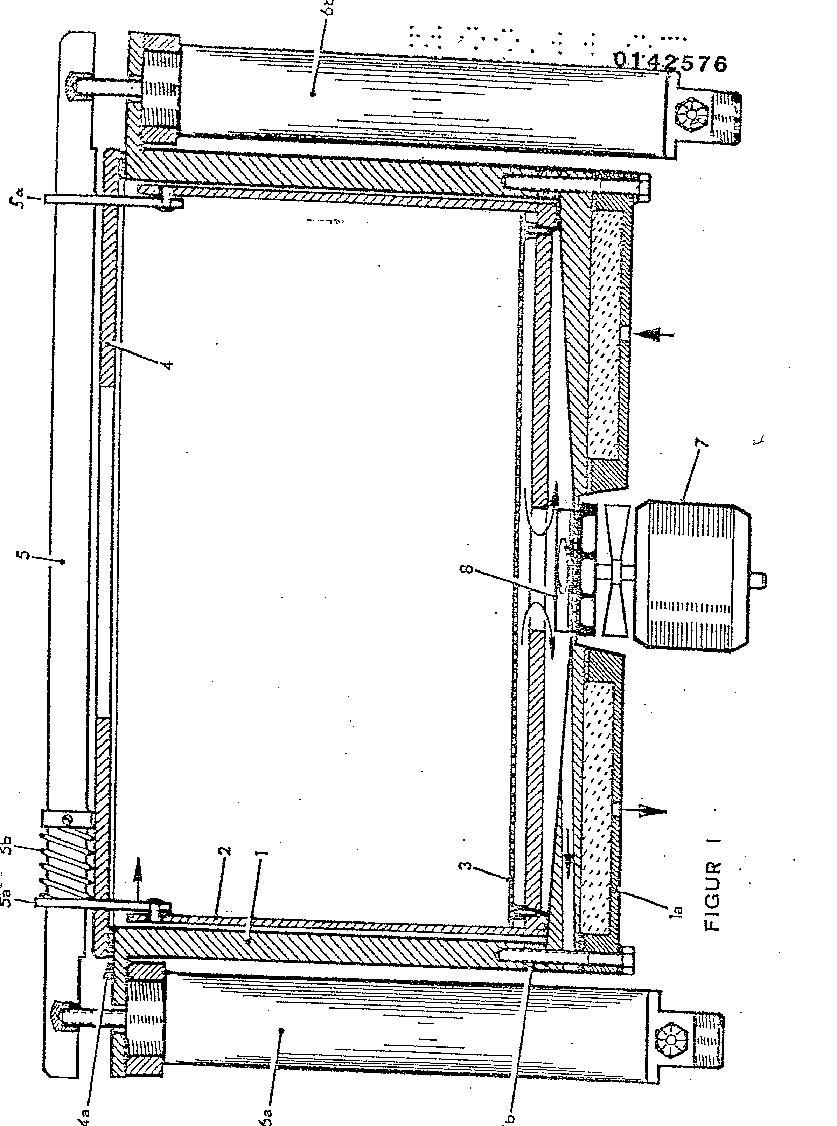

Figur 1 in einer Querschnittszeichnung die komplette Inkubationseinheit mit allen funktionswesentlichen Teilen und eingesetztem Präparateträger mit Aushubvorrichtung.

Figur 2 den Präparateträger mit mehreren eingelegten Schichten von Inkubationskapseln, die die biologischen Präparate beinhalten.

Figur 3 einen speziellen Mehrfachpräparatehalter von dem mehrere übereinander in den Präparateträger eingelegt werden können, als Alternative zu den einzelnen Präparatekapseln.

In den Figuren ist eine Inkubationseinheit für die Einbettung biologischer Präparate in Paraffin dargestellt, die sich durch ihre Verwendbarkeit in automatischen Inkubations- und Aufblockeinrichtungen auszeichnet und in ihrem grundsätzlichen Aufbau einerseits aus einer Außenkammer 1 aus Metall besteht, deren Bodenteil unter Zwischenmontage eines schlechten Wärmeleiters 1b gegen die Seitenteile verschraubt wird. Gegen den Bodenteil der Außenkammer 1 wird zur Temperierbarkeit des Bodenteiles eine Hohlplatte 1a mit Zu- und Ablauf für ein Temperiermedium geschraubt. Alternativ kann gegen den Bodenteil ein Wärmeaustauscher mit Kühlschlangen geschraubt werden. Die Seitenteile der Außenkammer 1 können durch nicht eingezeichnete Heizelemente getrennt von dem Bodenteil temperiert werden, was für die Funktionsfähigkeit der Inkubationseinheit von entscheidender Bedeutung ist.

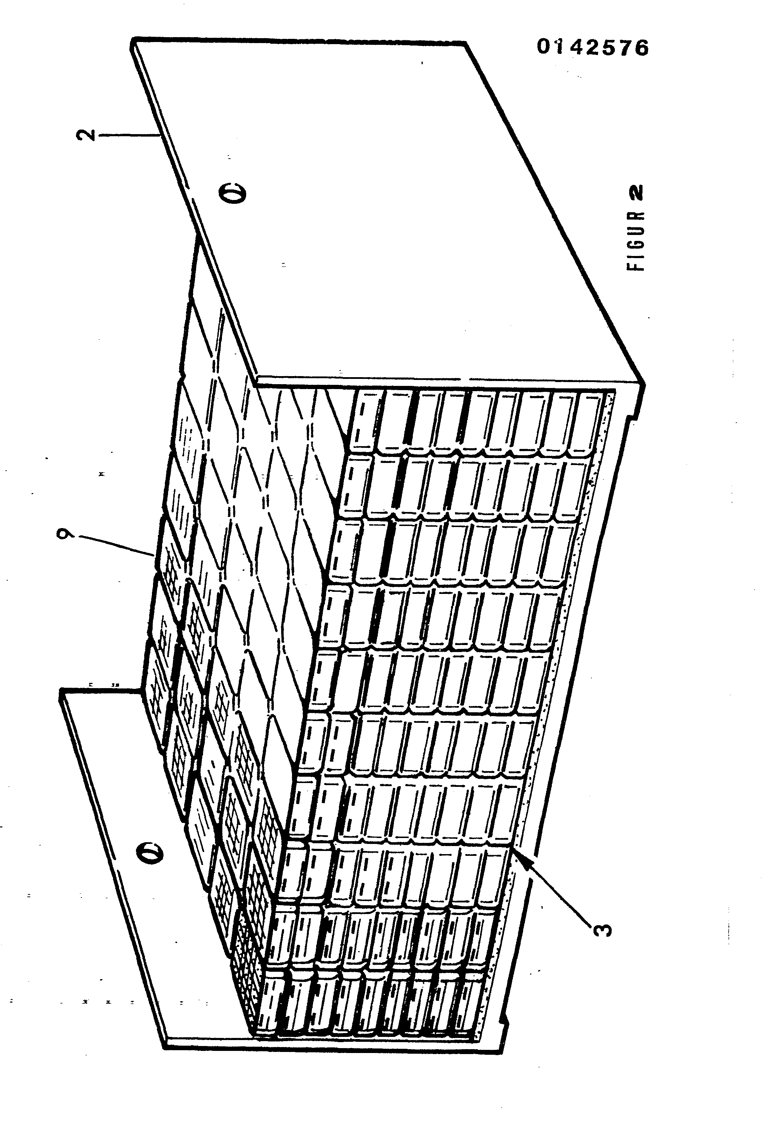

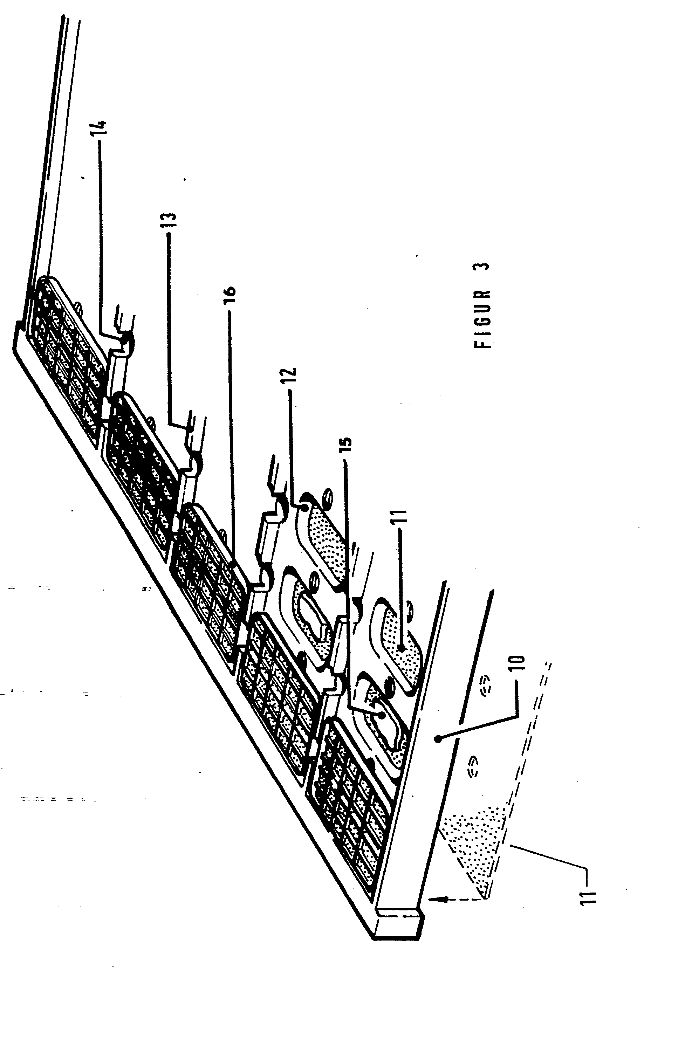

In diese Außenkammer 1 wird andererseits der Präparateträger 2, bestehend aus nicht näher gekennzeichneten Seitenteilen und zentral durchbrochener Grundplatte, lose eingesetzt. Mit entsprechendem Abstand wird gegen die Grundplatte des Präparateträgers 2 der Siebboden 3 geschraubt, auf den die in Fig.2 dargestellten einzelnen Präparatekapseln 9 schichtweise aufgelegt werden. Alternativ können auf den Siebboden 3 auch die in Figur 3 dargestellten Mehrfachpräparatehalter 10 schichtweise aufgelegt werden.

Die Außenkammer 1 kann mit dem schematisch dargestellten Deckel 4 und Dichtung 4a mittels einer nicht dargestellten Andruckvorrichtung unter Verwendung der beiden Hubzylinder 6a und 6b vacuum- und druckdicht verschlossen werden.

Die Außenkammer 1 besitzt in der Bodenplatte einen Zu- bzw. Ablaufkanal für Reagenzien (waagerechter Pfeil) zum Anschluß an einen Reagenzienversorgungsteil und einen nicht dargestellten Anschluß für eine VacuumDruckpumpe, mit der die Inkubationskammer beliebig unter Druck und Vacuum gesetzt werden kann.

Der Präparateträger 2 kann mittels einer Aushubvorrichtung, bestehend aus den beiden Hubzylindern 6a und 6b sowie Querbalken 5 mit Rastarmen 5a und Andruckfeder 5b, durch die an der Außenkammer 1 befestigten Hubzylinder 6a und 6b gegen den Widerstand des am Ende des Einbettungsprozesses erstarrten Paraffins aus der Inkubationseinheit herausgehoben werden.

Zur Erzielung einer gleichmäßigen Zirkulation der Fixierungs-, Entwässerungs- oder Einbettungsmedien in der Inkubationseinheit ist gegen den Bodenteil der Außenkammer 1 ein Magnetrührwerk 7 montiert, welches durch seine Drehbewegung den in der Inkubationskammer befindlichen Magnetfisch 8 in Drehbewegungen versetzt. Durch die Rotation des Magnetfisches 8 wird die Flüssigkeit im Bodenraum zu den vor und hinter der Schnittebene liegenden Seitenwänden befördert, wo sie aufsteigt. Der entstehende Sog bewirkt eine gleichmäßige Zirkulation der Flüssigkeiten durch alle Schichten der Präparatekapseln 9, die perforierte Deckel und Böden besitzen, und durch den Siebboden 3, unter dem die Flüssigkeit wieder angesaugt wird.

4

Der Mehrfachpräparatehalter 10 mit einer Vielzahl von Vertiefungen mit abgeschrägten und abgerundeten Wänden 12 wird Bodenseitig von einem Siebboden 11 abgeschlossen. Auf den Siebboden 11 werden die zu behandelnden biologischen Gewebeproben 15 aufgelegt und mit einem Aufblockrahmen 16 abgedeckt, der durch seitliche Stege 13 gegen Verschiebung gesichert ist. Mehrere dieser Mehrfachpräparateträgers 10 können schichtweise auf den Siebboden 3 des Präparateträgers 2 aufgelegt werden. Nach Abschluß der Infiltration der biologischen Präparate 15 mit Paraffin un der Erstarrung des Paraffins kann die aus Aufblockrahmen 16, erstarrtem Paraffin und biologischem Gewebe 15 bestehende Einheit (aufgeblocktes Präparat) durch einen nicht dargestellten Stift, der von der Unterseite durch das Loch 14 hochgedrückt wird, aus dem Mehrfachpräparatehalter 10 gelöst werden.

Eine weitere nicht zeichnerisch dargestellte Ausführung des Präparateträgers verfügt über Kapselhalterungen, die um 90° geschwenkt werden können um das oben beschriebene Aufblockverfahren realisieren zu können.

Patentansprüche

1. Inkubationskammer für die Einbettung biologischer Präparate in Paraffin, gekennzeichnet durch eine Außenkammer (1) mit unabhängig von einander temperierbaren Seitenwänden und Bodenplatte, in welche ein zugehöriger herausnehmbarer Präparateträger (2) mit Siebboden (3) eingesetzt wird, auf den schichtweise einzelne Präparatekapseln (9) oder Mehrfachpräparateträger (10) aufgebracht werden, wobei ein an der Bodenplatte der Außenkammer (1) montiertes Magnetrührwerk (7) mit Rührfisch (8) eine Zwangszirkulation der in der Inkubationskammer befindlichen Flüssigkeit bewirkt, und der Präparateträger (2), welcher die schichtweise aufgelegten Präparatekapseln (9) oder die Mehrfachpräparatehalter (10) trägt, mittels einer Aushubvorrichtung,z.B. bestehend aus den beiden an der Außenkammer (1) befestigten Hubzylindern (6a) und (6b) sowie dem Querbalken (5) mit Rastarmen (5a), aus der Inkubationskammer herausgehoben werden kann.

2. Inkubationskammer nach Patentanspruch 1, gekennzeichnet durch einen Präparateträger (2) mit zwei Seitenwänden, der einen auf Abstand montierten Siebboden (3) besitzt, der mit der Grundplatte des Präparateträgers (2) einen seitlich rundherum begrenzten Raum bildet, wobei die Grundplatte zentral durchbrochen ist und in Verbindung mit einem Magnetrührwerk (7) und Magnetfisch (8) an der Bodenplatte der Außenkammer (1) eine Zwangszirkulation der Flüssigkeit durch die auf den Siebboden (3) des Präparateträgers (2) schichtweise aufgelegten Präparatekapseln (9) oder die Mehrfachpräparatehalter (10) bewirkt.

3.Inkubationskammer nach Patentanspruch 1 und 2, gekennzeichnet durch einen Mehrfachpräparatehalter (10), der eine Vielzahl von Objekträumen für biologische Präparate (15) mit abgeschrägten und abgerundeten Wänden (12) besitzt, die bodenseitig mit einem Siebboden (11) abgeschlossen sind und nach Einlegen der biologischen Präparate mit einem Ausblockrahmen (16) abgedeckt werden.

4. Mechanische Einrichtung für beliebige Inkubationskammern, gekennzeichnet durch ihre Verwendbarkeit als Ausblockvorrichtung für biologische Präparate in Paraffin, bestehend aus einem oder mehreren bis zu 90° schwenkbaren Halterahmen für wannenförmige Inkubationskapseln mit Aufblockrahmen oder für Aufblockrahmen alleine, wobei die schwenkbaren Halterahmen dann selbst wannenförmig gestaltet sein können, und die Einrichtung nach dem Prinzip arbeitet, daß die wannenförmigen Inkubationskapseln für biologische Präparate während der Infiltrationsphase der Präparate in einen aufrechten Zustand versetzt werden, der einen ungehinderten Austausch der Reagenzien ermöglicht, und nach Abschluß der Infiltration in eine waagerechte Lage zurückversetzt werden, die ein Abfließen des heißen und flüssigen Paraffins verhindert, mit nachfolgender Abkükung des Paraffins.

FIGUR I

FIGUR 2

0142576

FIGUR 3

0142576

**0142576**
Nummer der Anmeldung

**EUROPÄISCHER RECHERCHENBERICHT**

Europäisches
Patentamt

EP  83 11 1657

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | EP-A-0 017 766  (FREIHERR VON GISE, HARDO, DR. MED.) * Patentansprüche * | 1 | G 01 N  1/28 |
| A | US-A-3 892 197  (T.D. KINNEY et al.) * Spalte 6, Zeilen 46-66; Figur 6 * | 1 | |
| A | DE-A-3 042 578  (C. REICHERT OPTISCHE WERKE) * Seiten 1-5 * | 1 | |
| A | DE-C- 861 029  (E.C. WEISKOPF) | | |
| A | US-A-3 234 595  (T.E. WEICHSELBAUM et al.) | | **RECHERCHIERTE SACHGEBIETE (Int. Cl. ³)** G 01 N  1/00 |

Der vorliegende Recherchenbericht wurde für alle Patentansprüche erstellt.

| Recherchenort DEN HAAG | Abschlußdatum der Recherche 10-07-1984 | Prüfer ANTHONY R.G. |
|---|---|---|